# EUROPEAN PATENT SPECIFICATION

(11) **EP 2 791 004 B1**
(45) Date of publication and mention of the grant of the patent: **29.06.2016**
(21) Application number: 12813489.7
(22) Date of filing: 22.11.2012
(51) Int. Cl.: B64D 1/14, B64C 39/02

(54) **SOFT LANDINGS SYSTEM FOR A LOAD IN FREE FALL, IN PARTICULAR FOR A VEHICLE, SUCH AS A PILOTED VEHICLE WITHOUT A DRIVER ON BOARD**
WEICHLANDUNGSSYSTEM FÜR EINE LAST IM FREIFALL, INSBESONDERE FÜR EIN FAHRZEUG, WIE EIN UNBEMANNTES FAHRZEUG
SYSTÈME D'ATTERRISSAGE EN DOUCEUR POUR UNE CHARGE EN CHUTE LIBRE, EN PARTICULIER POUR UN VÉHICULE, TEL QU'UN VÉHICULE PILOTÉ SANS CONDUCTEUR

(30) Priority: 16.12.2011 IT TO20111165
(43) Date of publication of application: 22.10.2014
(73) Proprietor: Oto Melara S.p.A., 19136 La Spezia (IT)
(72) Inventor: FRANCESCHI, Giuliano, I-19100 La Spezia (IT); GIOVANNINI, Andrea, I-19136 La Spezia (IT); VARONE, Fabio, I-19136 La Spezia (IT)
(74) Representative: Vitillo, Giuseppe
(86) International application number: PCT/IB2012/056634
(87) International publication number: WO 2013/088285

(56) References cited:
- EP-A1- 0 653 350
- EP-A1- 0 861 780
- EP-A2- 0 869 058
- US-A- 2 974 912
- US-A- 3 266 757
- US-A1- 2011 240 800
- US-B1- 6 607 166

## Description

### Technical field

The present invention relates to a soft landing system for a load in free fall, in particular for a vehicle, such as a piloted vehicle without a driver on board.

### Prior art

Soft landing systems are known to be used in this field for loads in free fall.

In order to ensure a soft landing of free falling loads, air cushions are generally used which are made of an air-impermeable material and inflated with a fluid under pressure. Such air cushions are mounted under the loads to be launched in free fall, and perform the function of damping the impact of the load against the ground.

US 6 607 166 B1 discloses a flying body that includes an upper stabilizing ring, a lower nose structure with a pneumatic damping body, spoke struts extending conically therebetween, a cover skin covering the abovementioned inflatable components to form the conical outer surface and provide aerodynamic braking drag, and gas generators to inflate the inflatable components. A person straps on the apparatus in the stowed backpack form and pulls a handle to actuate the gas generators for inflating the apparatus, whereby the expanding apparatus ejects the person from the building and then orients itself in a nose-down attitude during the descent. Another example of air cushion is disclosed in the document US 2011/0240800 A1.

However, the structure of known air cushions is not optimal and has some drawbacks.

### Brief description of the invention

It is one object of the present invention to provide a soft landing system for a load in free fall which is of an improved type while at the same time being produced in a simple and economical manner, thus overcoming the drawbacks of the prior art.

According to the present invention, this and other objects are achieved through a system as specified above, having the features set out in the appended claim 1.

It is understood that the appended claims are an integral part of the technical teachings provided in the present description of the invention.

### Brief description of the drawings

Further features and advantages of the present invention will become apparent from the following detailed description, provided by way of non-limiting example with reference to the annexed drawings, wherein:
- Figures 1 to 3 are, respectively, a perspective view, a side elevation view and a front elevation view of a first exemplary embodiment of a soft landing system according to the present invention, with a vehicle resting thereon; and
- Figures 4 to 6 are, respectively, a perspective view, a side elevation view and a front elevation view of a second exemplary embodiment of the soft landing system according to the present invention, with a vehicle resting thereon.

### Detailed description of the invention

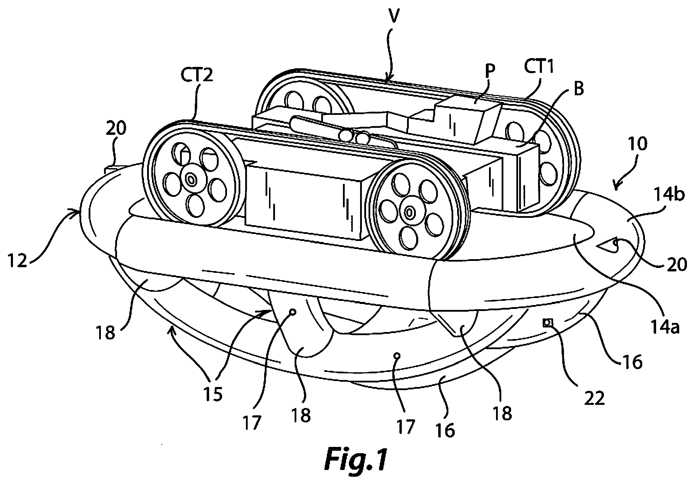

With reference to Figures 1 to 3, reference numeral 10 indicates a first embodiment of a soft landing system for a load in free fall, according to the present invention.

In these drawings, the system 10 is shown together with the load, indicated as a whole as V. In the illustrated example of embodiment, the load is a vehicle V, shown schematically in the drawings. Preferably, the vehicle V is a piloted vehicle without a driver on board (also known as "unmanned vehicle", abbreviated with the acronym UV). More preferably, the vehicle V is a piloted terrestrial vehicle without a driver on board (known as "unmanned ground vehicle, abbreviated with the acronym UGV). By way of non-limiting example, the vehicle V is a military tracked robot equipped with a main body B supported by a pair of side tracks CT1, CT2, and containing an ammunition payload P.

The system 10 comprises an air cushion structure, indicated as a whole as 12, on which the vehicle V must be laid, and which is adapted to be inflated with a fluid under pressure, so as to protect the vehicle V when it hits the ground after having been launched in free fall. In particular, as the structure 12 hits the ground, the kinetic energy accumulated by the free falling vehicle V is transferred from the latter to the structure 12, which is thus subjected to deformation, whereupon said fluid is compressed and is vented out of the structure in a gradual manner.

In Figures 1 to 3, the structure 12 is shown in its inflated configuration.

The structure 12 comprises a housing portion 14, adapted to house the vehicle V, and a support portion 15, which comprises a plurality of tubular elements 16 inflatable with fluid under pressure (e.g. pressurized air), thus taking an outstretched configuration in which they support the housing portion 14. In the illustrated embodiment, the outstretched configuration corresponds to a prevalently horizontal arrangement of the tubular elements.

In addition, the structure 12 comprises a breather apparatus 17 (visible in Figure 1 only), adapted to gradually deflate the tubular elements 16 when the structure 12 is free falling integrally with the vehicle V and the tubular elements 16 hit the ground.

The tubular elements 16 are made of a material impermeable to the inflating fluid (e.g. impermeable to air).

In the first embodiment, when the tubular elements 16 are in the outstretched configuration, they are laterally spaced from and preferably parallel to one another.

Preferably, when the tubular elements 16 are in the outstretched configuration, they have a curved shape in their main extension direction and tend to bend in order to support the overlying housing portion 14, which in turn supports the vehicle V. Advantageously, the curved shapes defined by the tubular elements 16 lie in planes substantially parallel to one another and substantially perpendicular to the plane defined by the housing portion 14.

In this first embodiment, when the tubular elements 16 are in the outstretched configuration, their concavity faces the housing portion 14, i.e. upwards with the system 10 in its operating condition. Preferably, the ends of the tubular elements 16 end into the housing portion 14.

Preferably, the support portion 15 comprises a plurality of additional tubular elements 16 which are inflatable with fluid under pressure (e.g. pressurized air), thus taking an outstretched configuration in which they support the housing portion 14, and which are arranged in a direction substantially transversal to the tubular elements 16.

Advantageously, the curved shapes defined by the additional tubular elements 18 lie in planes parallel to one another and perpendicular to the planes defined by the tubular elements 16 and to the plane defined by the housing portion 14.

Preferably, the additional tubular elements 18 have the same technical characteristics as those previously described with reference to the tubular elements 16. For simplicity, such technical characteristics will not be repeated below, and reference should be made to the above description.

Preferably, the tubular elements 16 and the additional tubular elements 18 are interconnected and in fluidic communication with one another. More preferably, each tubular element 16 intersects all the additional tubular elements 18, and vice versa. In the first embodiment, the tubular elements 16 and the additional tubular elements 18 are in fluidic communication with one another, thus creating a single "reticular" chamber for the inflating fluid. The support portion 15 creates a substantially hull-shaped (or "keel-shaped") concave framework or frame. Such a geometry is particularly advantageous for absorbing impacts in directions other than perpendicular to the ground.

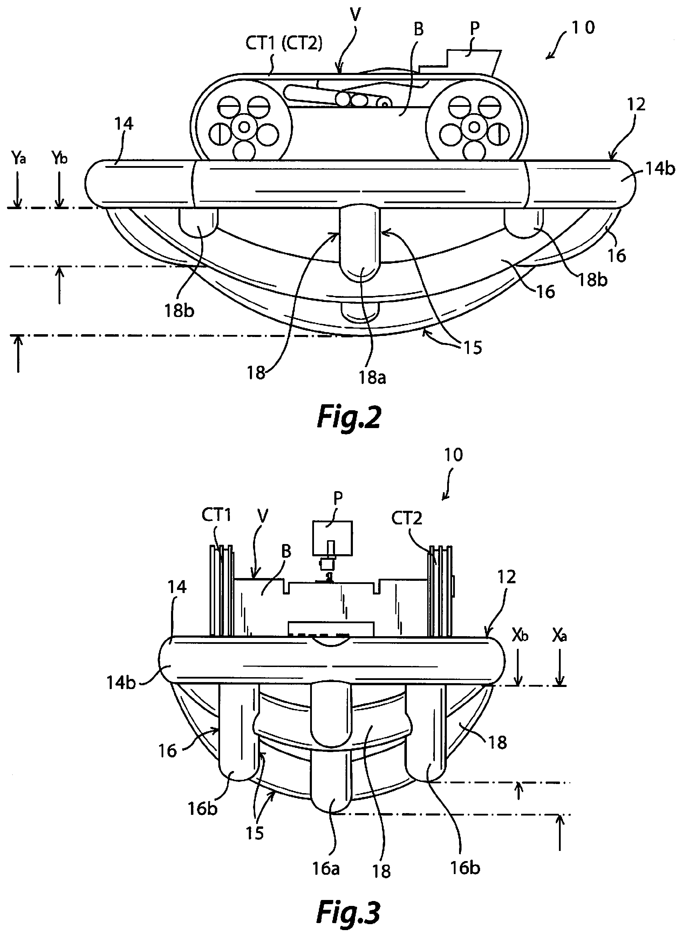

In the front elevation view shown in Figure 3, the tubular elements 16 preferably define curved shapes having respective maximum heights decreasing starting from the tubular elements 16a in the central position towards the tubular elements 16b in the periphery of the structure 12. By way of example, each one of the peripheral tubular elements 16b has a maximum height X_{b} which is shorter than the maximum height Xₐ of the central tubular element 16a.

Likewise, in the side elevation view shown in Figure 2, also the additional tubular elements 18 define curved shapes having respective maximum heights progressively decreasing starting from the additional tubular elements 18 in the central position of said structure 12 towards the additional tubular elements 18 in the periphery of the structure 12. By way of example, each one of the peripheral additional tubular elements 18b has a maximum height Y_{b} which is shorter than the maximum height Yₐ of the central additional tubular element 18a.

Advantageously, but not necessarily, the housing portion 14 can be inflated with fluid under pressure into an extended configuration (Figures 1 to 3). Preferably, the housing portion 14 is in fluidic communication with the support portion 15, thus forming a single chamber for the inflating fluid.

In the first embodiment shown herein, when the housing portion 14 is in its extended configuration, it comprises a central floor 14a (visible in Figure 1 only) and a peripheral edge 14b, inflated with fluid under pressure, which surrounds the central floor 14a and which is raised from the latter. In this manner, when the vehicle V is resting on the central floor 14a, it is surrounded by the peripheral edge 14b, which can thus prevent any undesired movement thereof beyond the housing portion 14 before the support portion 15 completely deflates following the impact against the ground. For example, the peripheral edge 14b consists of a perimetric edge having a tubular shape, advantageously made of material impermeable to the inflating fluid (preferably air).

Preferably, the tubular elements 16 and possibly also the additional tubular elements 18 end into the peripheral edge 14b and are in fluidic communication with the latter, thus forming as a whole a single air chamber for the inflating fluid, shared by the housing portion 14 and the support portion 15.

Preferably, the structure 12 comprises grip members 20 (visible in Figure 1 only) adapted to facilitate gripping the system 10 in order to launch it in free fall integrally with the vehicle V, e.g. from a flying aircraft. For example, the grip members are handles 20 provided on the housing portion 14. In this first embodiment, the handles 20 are located on opposite sides of the peripheral edge 14b.

Preferably, the structure 12 has an inlet 22 (visible in Figure 1 only) adapted to be coupled to a pressurized fluid tank (e.g. containing pressurized air) for inflating the support portion 15. In this first embodiment, the inlet 22 is provided on the support portion 15, e.g. on one of the tubular elements 16. However, in further variant embodiments not shown herein, the inlet 22 may be located in different positions of the structure 12.

The breather apparatus optionally comprises a plurality of breather valves 17 communicating with the support portion 15 and adapted to gradually deflate it. Preferably, the breather valves 17 are provided on the tubular elements 16 and/or on the additional tubular elements 18, e.g. distributed over the surface thereof. In further variants, if the housing portion 14 is in fluidic communication with the support portion 15, then breather valves 17 may be located on the housing portion 14, e.g. distributed along the peripheral edge 14b, as an alternative to or in combination with breather valves 17 provided on the support portion 15. However, as will be apparent to those skilled in the art, the breather valves 17 may be arranged in different positions of the structure 12. The function of the breather valves 17 is to open when the pressure of the fluid contained in the support portion 15 exceeds a predetermined threshold value, typically during the impact of the support portion 15 against the ground.

Preferably, the system 10 further comprises a releasable fixing device (not shown), adapted to hold the vehicle V in position on the housing portion 14. The fixing device may comprise one or more belts adapted to secure the vehicle V against the housing portion 14, which belts are fitted with respective releasable fastening mechanisms.

For example, the belts may be adapted to surround and secure the side tracks CT1, CT2 through manual activation of the fastening mechanisms. More preferably, the fixing device comprises a plurality of actuators adapted to remotely disable, in a controlled manner, the respective fastening mechanisms, thus removing the constraint created by the belts on the housing portion.

With reference to this first embodiment, the system 10 may possibly have one or more of the following optional features, which are mentioned below merely by way of non-limiting example:
- the system 10 has overall dimensions of 1,300 mm X 820 mm X 400 mm, a total volume of approx. 0.2 m³, and a weight of 1.2 kg;
- the tubular elements 16, the additional tubular elements 18 and the peripheral edge 14b have a diameter of 100 mm;
- the components of the housing portion 14 and of the support portion 15 are made of material impermeable to the inflating fluid (e.g. impermeable to air), such as a thermoplastic polymer fabric like, for example, polyester or polyvinylchloride; preferably, the polyester type is 500/500 4PU WR FR UV having a weight of 240 g/m²;
- the components of the housing portion 14 and of the support portion 15 are assembled by welding, e.g. by highfrequency welding (HFW), or by glueing;
- the breather valves 17 are calibrated to stay continuously open when the pressure in the support portion 15 reaches 0.32 bar;
- the adjustment of the flow rate of the breather valves 17 is done in such a way as to allow the support portion 15 to deflate completely in 40 seconds.

The following will briefly describe the operation of the first embodiment of the system 10.

Initially, the structure 12 is deflated and folded for comfortable transportation, e.g. in a knapsack.

When it is necessary to use the system 10, e.g. while flying on an aircraft containing the vehicle V, in order to ensure a soft landing of the latter, the structure 12 is preliminarily unfolded.

The vehicle V is then placed on the housing portion 14.

A tank of pressurized fluid, e.g. compressed air contained in a cylinder, is connected to the inlet 22, and the support portion 15 is then inflated. At this stage, the tubular elements 16, the additional tubular elements 18 and the peripheral edge 14b are brought into the respective outstretched configurations and the respective extended configuration, thus also lifting the vehicle V.

Subsequently, the belts of the fixing device are positioned around the side tracks CT1, CT2 and firmly tightened by manually activating the associated fastening mechanisms.

The system 10 and the overlying vehicle V are then transported, by gripping the structure 12 through the handles 20, and launched in free fall.

When the structure 12 hits the ground, the impact causes the support portion 15 to deform, thus compressing the fluid contained therein, which reaches the threshold value for opening the breather valves 17. In this manner, through proper adjustment of the breather valves 17, the flow of fluid coming out of the support portion 15 ensures a gradual deflation of the tubular elements 16, of the additional tubular elements 18 and of the peripheral edge 14b, until the vehicle V rests on the ground.

Afterwards, the belt fastening mechanisms are remotely opened, thereby disabling the fixing device and releasing the vehicle V from the housing portion 14.

The soft landing is thus completed, and the vehicle V can be remotely controlled in a per se known manner, while the system 10 is ready to be folded again and carried away for further use.

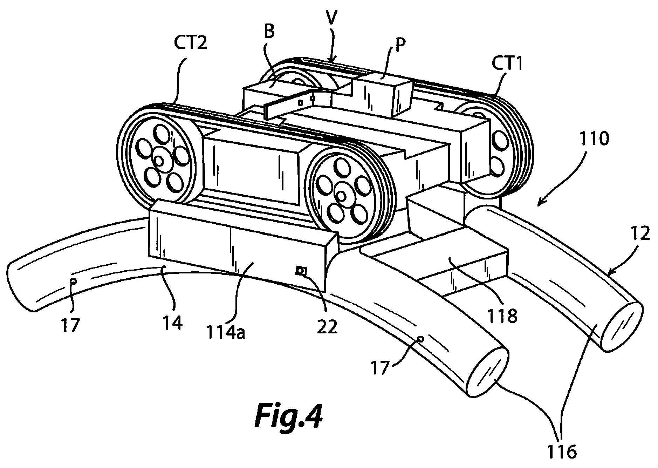

With reference to Figures 4 to 6, reference numeral 110 designates a second embodiment of a soft landing system for a load in free fall according to the present invention.

Parts and elements similar to, or performing the same function as, those of the previously illustrated embodiment are indicated by means of the same alphanumeric references. For simplicity, the description of such parts and elements will not be repeated below, and reference should be made to the information provided in the description of the first embodiment.

As concerns those parts and elements with substantial differences from the structural and/or functional viewpoint with respect to the first embodiment, they will be indicated by means of the same alphanumeric references with the addition of the value 100.

Unlike the first embodiment, the tubular elements 116, preferably provided in pair, have their concavity facing away from the housing portion 14.

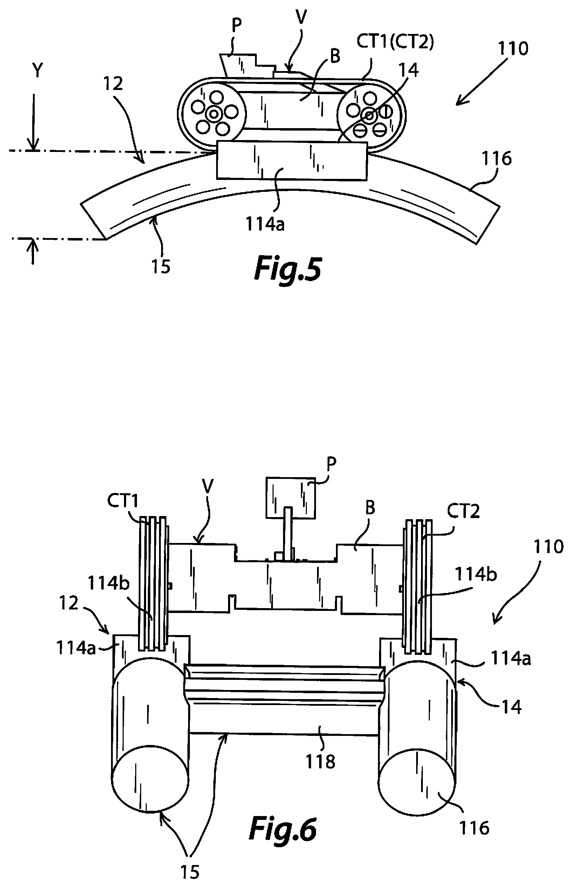

Unlike the first embodiment, the arcs defined by the tubular elements 116 have substantially the same maximum height Y (Figure 5). Preferably, the arcs defined by the tubular elements 116 are parallel, since they have the same profile. Therefore, in the second embodiment the support portion 15 takes a substantially bridge-like (or "crossbow-like") shape.

Unlike the first embodiment, the additional tubular elements 118 are substantially straight.

Unlike the first embodiment, the housing portion 14 comprises a pair of rails 114a, each one of them lying on a tubular element 116 and being adapted to house a specific portion of the vehicle V. Preferably, each rail 114a has a groove or seat 114b, into which one of the side tracks CT1, CT2 can be coupled.

Similarly to the first embodiment, the system 110 may comprise an inlet (previously designated 22), grip handles (previously designated 20) and/or a fixing device. For simplicity, the technical specifications of said elements will not be described again, and reference should be made to the description of the first embodiment.

This second embodiment has the advantage of simplifying the production process for manufacturing the system 110.

In addition, with reference to this second embodiment, the system 110 may possibly have one or more of the following optional features, which are mentioned below merely by way of non-limiting example:
- the tubular elements 116 have a diameter of 150 mm;
- the components of the housing portion 14 and of the support portion 15 are made of material impermeable to the inflating fluid (e.g. impermeable to air), preferably a thermoplastic polymer fabric like, for example, polyester or polyvinylchloride (PVC); advantageously, the polyester type is 1100/1100 4PU WR FR UV having a weight of 750 g/m²;
- the tubular elements 116 of the support portion 15 can be inflated to a pressure of 0.2 bar;
- the breather valves 17 are calibrated to stay
continuously open when the pressure in the tubular elements 116 of the support portion 15 reaches 0.22 bar; and - the tubular elements 116 may be made by using an extruded chamber of neutral polyurethane (PU) inserted into a textile sheath.

The operation of the second embodiment of the system 110 is substantially the same as described with reference to the first embodiment. Therefore, for simplicity said operation will not be described again below, and reference should be made to the description of the first embodiment.

The technical characteristics that differentiate the various variants and embodiments described and illustrated herein are freely interchangeable, when compatible.

Of course, without prejudice to the principle of the invention, the forms of embodiments and the implementation details may be amply varied with respect to what has been described and illustrated herein by way of non-limiting example, without however departing from the scope of the invention as set out in the appended claims.

## Claims

1. Soft landing system (10) including a load suited to be launched in free fall and an air cushion structure (12) comprising:
- a housing portion (14), adapted to house said load (V);
- a support portion (15), connected to the housing portion (14) and inflatable with fluid under pressure; said support portion (15) comprising a plurality of tubular elements (16; 116) adapted to be inflated, thus taking an outstretched configuration in which they support said housing portion (14); and
- a breather apparatus (17), adapted to gradually deflate said tubular elements (16; 116) when said structure is free falling integrally with said load (V) and said support portion (15) hits the ground;
said system (10) being **characterized in** comprising a releasable fixing device, adapted to hold said load (V) in position on said housing portion (14) and able to be remotely disabled in a controlled manner, thus releasing said load (V) from the housing portion (14); said load being an unmanned ground vehicle or UGV (V).

2. System according to claim 1, wherein said releasable fixing device comprises at least a belt adapted to secure said unmanned ground vehicle (V) against said housing portion (14), said belt being fitted with at least a respective releasable fastening mechanism.

3. System according to claim 1 or 2, wherein said unmanned ground vehicle (V) is a military tracked robot equipped with a main body (B) supported by a pair of side tracks (CT1, CT2); said releasable fixing device being adapted to secure said side tracks (CT1, CT2).

4. System according to claim 2 or 3, wherein said releasable fixing device comprises at least an actuator adapted to remotely disable, in a controlled manner, said at least one releasable fastening mechanism, thus removing the constraint created by said at least a belt on said housing portion.

5. System according to any of the previous claims, wherein, when said tubular elements (16; 116) are in the outstretched configuration, they have a curved shape in their main extension direction and tend to bend in order to support said overlying housing portion (14).

6. System according to any of the previous claims, wherein said support portion (15) further comprises a plurality of additional tubular elements (18; 118) adapted to be inflated with fluid under pressure, thus taking an outstretched configuration in which they are arranged transversally to said tubular elements (16; 116).

7. System according to claim 6, wherein the tubular elements (16; 116) and the additional tubular elements (18; 18) are interconnected and in fluidic communication with one another (18; 118).

8. System according to any one of claims 5 to 7, wherein, when said tubular elements (16) and/or said additional tubular elements (18) are in their outstretched configuration, their concavity faces said housing portion (14).

9. System according to claim 8, wherein said housing portion (14) rests on the ends of said tubular elements (16) and/or of said additional tubular elements (18) when they are in their outstretched configuration.

10. System according to claim 8 or 9, wherein each tubular element (16) intersects all the additional tubular elements (18), and vice versa.

11. System according to any one of claims 8 to 10, wherein said housing portion (14) can be inflated with fluid under pressure in order to be placed in an extended condition, and is in fluidic communication with said tubular elements (16) and/or said additional tubular elements (18).

12. System according to any one of claims 4 to 7, wherein, when said tubular elements (116) are in the outstretched configuration, their concavity faces the direction opposite to said housing portion (14).

13. System according to claim 12, wherein said housing portion (14) rests on an intermediate section of said tubular elements (116).

14. System according to claim 12 or 13, wherein said tubular elements (116) define curved shapes substantially having the same maximum height (Y).

## Patentansprüche

1. System für eine weiche Landung (10) mit einer Last, welches ausgelegt ist, im freien Fall abgeworfen zu werden, und mit einer Luftkissenstruktur (12), umfassend:
- einen Gehäuseabschnitt (14), welcher ausgelegt ist, die Last (V) aufzunehmen;
- einen Stützabschnitt (15), welcher mit dem Gehäuseabschnitt (14) verbunden und mit unter Druck stehendem Fluid aufblasbar ist; wobei der Stützabschnitt (15) eine Vielzahl von rohrförmigen Elementen (16; 116) umfasst, die ausgelegt sind, um aufgeblasen zu werden, so dass sie eine ausgestreckte Konfiguration einnehmen, in der sie den Gehäuseabschnitt (14) unterstützen; und
- eine Entlüftungsvorrichtung (17), welche ausgelegt ist, um allmählich die rohrförmigen Elemente (16; 116) abzulassen, wenn die Struktur integral mit der Last (V) frei fällt und der Stützabschnitt (15) auf dem Boden aufschlägt;
wobei das System (10) **dadurch gekennzeichnet ist, dass** es eine lösbare Befestigungsvorrichtung umfasst, die ausgelegt ist, die Last (V) in Position auf dem Gehäuseabschnitt (14) zu halten und in der Lage ist, aus der Ferne auf eine kontrollierte Weise deaktiviert zu werden, so dass die Last (V) vom Gehäuseabschnitt (14) freigegeben wird; wobei die Last ein unbemanntes Bodenfahrzeug (unmanned ground vehicle) oder UGV (V) ist.

2. System nach Anspruch 1, wobei die lösbare Befestigungsvorrichtung wenigstens einen Riemen umfasst, welcher ausgelegt ist, um das unbemannte Bodenfahrzeug (V) am Gehäuseabschnitt (14) zu befestigen, wobei der Riemen mit wenigstens einem entsprechenden lösbaren Befestigungsmechanismus ausgestattet ist.

3. System nach Anspruch 1 oder 2, wobei das unbemannte Bodenfahrzeug (V) ein militärischer Laufkettenroboter ist, welcher mit einem Hauptkörper (B) ausgestattet ist, der durch ein Paar seitlicher Laufketten (CT1, CT2) getragen ist; wobei die lösbare Befestigungsvorrichtung ausgelegt ist, um die seitlichen Laufketten (CTL, CT2) zu befestigen.

4. System nach Anspruch 2 oder 3, wobei die lösbare Befestigungsvorrichtung wenigstens ein Betätigungselement umfasst, welches ausgelegt ist, um aus der Ferne auf eine kontrollierte Weise den wenigstens einen lösbaren Befestigungsmechanismus zu deaktivieren, wodurch die Bewegungsbeschränkung entfernt wird, die durch den wenigstens einen Riemen auf dem Gehäuseabschnitt erzeugt wird.

5. System nach einem der vorhergehenden Ansprüche, wobei, wenn die rohrförmigen Elemente (16; 116) in der ausgestreckten Konfiguration sind, sie eine gekrümmte Form in ihrer Haupterstreckungsrichtung aufweisen und dazu neigen, sich zu biegen, um den darüberliegenden Gehäuseabschnitt (14) zu stützen.

6. System nach einem der vorhergehenden Ansprüche, wobei der Stützabschnitt (15) des Weiteren eine Vielzahl von zusätzlichen rohrförmigen Elementen (18; 118) umfasst, welche ausgelegt sind, mit unter Druck stehendem Fluid aufgeblasen zu werden, wodurch sie eine ausgestreckte Konfiguration annehmen, in der sie quer zu den rohrförmigen Elementen (16; 116) angeordnet sind.

7. System nach Anspruch 6, wobei die rohrförmigen Elemente (16; 116) und die zusätzlichen rohrförmigen Elemente (18; 118) miteinander verbunden sind und in fluidischer Kommunikation miteinander (18; 118) stehen.

8. System nach einem der Ansprüche 5 bis 7, wobei, wenn sich die rohrförmigen Elemente (16) und/oder die zusätzlichen rohrförmigen Elemente (18) in ihrer ausgestreckten Konfiguration befinden, ihre Konkavität dem Gehäuseabschnitt (14) zugewandt ist.

9. System nach Anspruch 8, wobei der Gehäuseabschnitt (14) auf den Enden der rohrförmigen Elemente (16) und/oder den zusätzlichen rohrförmigen Elementen (18) ruht, wenn sie sich in ihrer ausgestreckten Konfiguration befinden.

10. System nach Anspruch 8 oder 9, wobei jedes rohrförmige Element (16) alle zusätzlichen rohrförmigen Elemente (18) schneidet, und umgekehrt.

11. System nach einem der Ansprüche 8 bis 10, wobei der Gehäuseabschnitt (14) mit unter Druck stehendem Fluid aufgeblasen werden kann, um in einem ausgestreckten Zustand angeordnet zu werden, und er in Fluidverbindung mit den rohrförmigen Elementen (16) und/oder den zusätzlichen rohrförmigen Elementen (18) steht.

12. System nach einem der Ansprüche 4 bis 7, wobei, wenn die rohrförmigen Elemente (116) sich in der ausgestreckten Konfiguration befinden, ihre Konkavität der Richtung entgegengesetzt dem Gehäuseabschnitt (14) zugewandt ist.

13. System nach Anspruch 12, wobei der Gehäuseabschnitt (14) auf einem Zwischenabschnitt der rohrförmigen Elemente (116) ruht.

14. System nach Anspruch 12 oder 13, wobei die rohrförmigen Elemente (116) gekrümmte Formen definieren, welche im Wesentlichen die gleiche maximale Höhe (Y) aufweisen.

## Revendications

1. Système d'atterrissage en douceur (10) qui comprend une charge conçue pour être larguée en chute libre et une structure de coussin d'air (12) comprenant :
- une partie de logement (14), conçue pour loger ladite charge (V) ;
- une partie de support (15), reliée à la partie de logement (14) et pouvant être gonflée avec un fluide sous pression ; ladite partie de support (15) comprenant une pluralité d'éléments tubulaires (16 ; 116) conçus pour être gonflés, en prenant ainsi une configuration étirée vers l'extérieur dans laquelle ils supportent ladite partie de logement (14) ; et
- un appareil à évent (17), conçu pour dégonfler progressivement lesdits éléments tubulaires (16 ; 116) lorsque ladite structure (12) est en chute libre d'un seul tenant avec ladite charge (V) et ladite partie de support (15) heurte le sol ;
ledit système (10) étant **caractérisé en ce qu'**il comprend un dispositif de fixation détachable, conçu pour maintenir ladite charge (V) en position sur ladite partie de logement (14) et apte à être désactivé à distance, de manière contrôlée, en libérant ainsi ladite charge (V) de ladite partie de logement (14) ; ladite charge étant un véhicule terrestre téléguidé (V) ou VTT.

2. Système selon la revendication 1, dans lequel ledit dispositif de fixation détachable comprend au moins une courroie conçue pour arrimer ledit véhicule terrestre téléguidé (V) contre ladite partie de logement (14), ladite courroie étant munie d'au moins un mécanisme de fixation détachable respectif.

3. Système selon les revendications 1 ou 2, dans lequel ledit véhicule terrestre téléguidé (V) est un robot à chenilles militaire équipé d'un corps principal (B) supporté par une paire de chenilles latérales (CT1 ; CT2) ; ledit dispositif de fixation détachable étant conçu pour arrimer lesdites chenilles latérales (CT1 ; CT2).

4. Système selon les revendications 2 ou 3, dans lequel ledit dispositif de fixation détachable comprend au moins un actionneur conçu pour désactiver, à distance, de manière contrôlée, ledit au moins un mécanisme de fixation détachable, en supprimant ainsi la contrainte créée par ladite au moins une courroie sur ladite partie de logement.

5. Système selon l'une quelconque des revendications précédentes, dans lequel lesdits éléments tubulaires (16 ; 116) se trouvent dans la configuration étirée vers l'extérieur, ont une forme incurvée dans la direction principale de leur extension et ont tendance à fléchir afin de supporter ladite partie de logement (14) superposée.

6. Système selon l'une quelconque des revendications précédentes, dans lequel ladite partie de support (15) comprend en outre une pluralité d'éléments tubulaires supplémentaires (18 ; 118) conçus pour être gonflés avec un fluide sous pression, en prenant ainsi une configuration étirée vers l'extérieur dans laquelle ils sont agencés transversalement par rapport auxdits éléments tubulaires (16 ; 116).

7. Système selon la revendication 6, dans lequel lesdits éléments tubulaires (16 ; 116) et/ou lesdits éléments tubulaires supplémentaires (18 ; 118) sont interconnectés et en communication fluidique les uns avec les autres (18 ; 118).

8. Système selon l'une quelconque des revendications 5 à 7, dans lequel lesdits éléments tubulaires (16) et/ou lesdits éléments tubulaires supplémentaires (18) se trouvent dans leur configuration étirée vers l'extérieur, leurs faces concaves étant tournées vers ladite partie de logement (14).

9. Système selon la revendication 8, dans lequel ladite partie de logement (14) repose sur les extrémités desdits éléments tubulaires (16) et/ou desdits éléments tubulaires supplémentaires (18) lorsqu'ils se trouvent en configuration étirée vers l'extérieur.

10. Système selon les revendications 8 ou 9, dans lequel chaque élément tubulaire (16) coupe tous les éléments tubulaires supplémentaires (18), et vice versa.

11. Système selon l'une quelconque des revendications 8 à 10, dans lequel ladite partie de logement (14) peut être gonflée avec un fluide sous pression, afin d'être placée dans une configuration déployée, et se trouve en communication fluidique avec lesdits éléments tubulaires (16) et/ou lesdits éléments tubulaires supplémentaires (18).

12. Système selon l'une quelconque des revendications 4 à 7, dans lequel lesdits éléments tubulaires (116) sont en configuration étirée vers l'extérieur, leurs faces concaves étant tournées dans la direction opposée à ladite partie de logement (14).

13. Système selon la revendication 12, dans lequel ladite partie de logement (14) repose sur une section intermédiaire desdits éléments tubulaires (116).

14. Système selon les revendications 12 ou 13, dans lequel lesdits éléments tubulaires (116) définissent des formes incurvées ayant sensiblement la même hauteur maximum (Y).
